# EUROPÄISCHE PATENTSCHRIFT

(11) **EP 0 969 340 B1**
(45) Veröffentlichungstag und Bekanntmachung des Hinweises auf die Patenterteilung: **24.11.2004**
(21) Anmeldenummer: 99250205.4
(22) Anmeldetag: 23.06.1999
(51) Int. Cl.: G05B 19/4065

(54) **Verfahren und Vorrichtung zum Detektieren des Auftretens eines kritischen Zustandes eines Werkzeuges, insbesondere Sägeblattes**
Process and device for the detection of a critical state of a tool , particulary of a saw blade
Procédé et dispositif pour la détection d' un état critique d' un outil, en particulier une lame de scie

(30) Priorität: 26.06.1998 DE 19830035
(43) Veröffentlichungstag der Anmeldung: 05.01.2000
(73) Patentinhaber: V & M Deutschland GmbH, 40472 Düsseldorf (DE)
(72) Erfinder: Dörfler, Matthias, Dipl.-Ing. (FH), 01591 Riesa (DE); Niendorf, Kurt, Dipl.-Ing. (FH), 01591 Riesa (DE)
(74) Vertreter: Meissner, Peter E., Dipl.-Ing.

(56) Entgegenhaltungen:
- US-A- 4 978 909
- US-A- 5 243 533
- US-A- 5 523 701
- SPUR G ET AL: "SENSORLOSE WERKZEUGUEBERWACHUNG FUER DIE CNC-DREHBEARBEITUNG SENSORLESS TOOL MONITORING FOR CNC LATHE OPERATION" ZWF ZEITSCHRIFT FUR WIRTSCHAFTLICHE FERTIGUNG UND AUTOMATISIERUNG, Bd. 88, Nr. 4, 1. April 1993 (1993-04-01), Seiten 173-175, XP000360368 ISSN: 0947-0085

## Beschreibung

Die Erfindung betrifft ein Verfahren zum Detektieren des Auftretens eines kritischen Zustandes an einem in einer Werkzeugmaschine zur Bearbeitung eines Werkstückes eingesetzten Werkzeug während des Betriebes der Werkzeugmaschine und eine Vorrichtung zur Durchführung des Verfahrens. Ein derartiger kritischer Zustand kann als eine kritische Minder-Funktionsfähigkeit eines Werkzeuges bezeichnet werden. Eine kritische Minder-Funktionsfähigkeit kann insbesondere durch Verschleißerscheinungen entstehen.

Eine bekannte Vorrichtung der Firma Mikrotec Systemeletronik zur Werkzeugüberwachung mit der Bezeichnung "MSE 214" liefert bei der Detektion von Fehlern an Werkzeugen, insbesondere bei der Sägeblattbrucherkennung an Blocksägen innerhalb einer Rohrwalzstraße keine hinreichende Sicherheit bei der Detektion von kritischen Zuständen eines Werkzeuges. Bei dieser Vorrichtung wird mittels eines Wirbelstromsensors die Zahnhöhe von Zähnen auf einem Sägeblatt vermessen und ausgewertet. Späneflug und anhaftende Späne führen zu Fehlermeldungen. Zugesetzte Spankammern werden nicht erkannt. Neu eingesetzte Sägeblätter werden von der Vorrichtung als in kritischem Zustand befindlich beurteilt, obwohl sie in einwandfreiem Zustand sind. Regenerierte Sägeblätter werden teilweise ebenfalls als fehlerhaft bewertet. Der Wirbelstromsensor, mittels welchem die Vorrichtung Fehler zu detektieren versucht und dessen Anstellmechanik unterliegen einem sehr hohen Verschleiß. Ferner sind Eich- und Lernroutinen zum Implementieren der Vorrichtung erforderlich.

Weitere bekannte Ansätze betreffen Körperschallanalysen von Werkzeugen, die sich bisher in der Praxis aber nicht durchsetzen konnten.

Ein Verfahren zur Verschleißerkennung eines elektromotorisch angetriebenen Sägeblattes ist aus der DE 41 27 191 A1 bekannt. Bei diesem bekannten Verfahren wird die über die Standzeit des Sägeblattes zunehmende Stromaufnahme des Sägeblatt-Antriebsmotors gemessen und mit einem vorgegebenen Referenz-Sollwert verglichen. Beim Erreichen einer den nicht mehr tolerierbaren Verschleiß darstellenden rechnerisch oder empirisch ermittelten Abweichung vom Referenz-Sollwert wird ein Signal zum Auswechseln des Sägeblattes gegeben. Als Referenz-Sollwert wird die aus mehreren Sägeschnitten ermittelte mittlere Stromaufnahme vorgegeben. Um Spitzenwerte der Stromaufnahme, die mit dem Verschleiß des Sägeblattes nicht in Verbindung zu bringen sind, zu eliminieren, erfolgt die Ermittlung der mittleren Stromaufnahme durch Messung der einzelnen Stromaufnahmen in den mittleren Schnittphasen jedes gemessenen Sägeblattes.

Nachteilig bei diesem bekannten Verfahren ist, daß kritische Zustände des Sägeblattes, deren Stromaufnahme noch unterhalb des Referenz-Sollwertes liegt, nicht erfaßt werden können und dieses System nicht in der Lage ist, die Detektion kritischer Zustände an Werkzeugen insbesondere hartmetallbestückter Sägeblätter zu jedem Zeitpunkt des Sägeschnittes unabhängig von der Größe des Stromeffektivwertes der Antriebseinheit vorzunehmen.

Die Schrift US-A-5 243 533 offenbart eine Vorrichtung zum Detektierten des Auftretens eines kritischen Zustandes an einem in einer Werkzeugmaschine zur Bearbeitung eines Werkstücks eingesetzten Werkzeug während des Betriebes der Werkzeugmaschine. In einem Meß- und Sollwert-Bildungsglied werden Sollwerte für den die Antriebseinrichetung der Werkzeugnaschine durchfließenden Strom gebildet und diese dann mit dem aktuellen Ist-Wert verglichen. Bei Überschreiten eingestellter Vergleichswerte werden an Ausgängen der Vergleichseinrichtung einen kritischen Zustand repräsentierende Signale abgegeben.

Hiervon ausgehend ist die Aufgabe der Erfindung ein Verfahren zum Detektieren des Auftretens eines kritischen Zustandes eines in einer Werkzeugmaschine zur Bearbeitung eines Werkstückes eingesetzten Werkzeuges anzugeben, mit dem auch nicht den normalen Verschleiß betreffende kritische Zustände erfaßt werden können.

Die Aufgabe wird durch die Merkmale der unabhängigen Ansprüche gelöst.

Die Erfindung erlaubt einfach und kostengünstig eine instantane, zuverlässige Detektion kritischer Zustände eines Werkzeuges, insbesondere eines Sägeblattes. Dabei sind keine Lern- oder Eichroutinen notwendig. Ferner können allmählich auftretende kritische Zustände, wie Verschleißabnutzungen an Sägeblattzähnen bei Überschreitung eines Schwellwertes zuverlässig detektiert werden. Ferner erlaubt die Erfindung eine quantisierte Ausgabe des Grades des kritischen Zustandes. Dabei kann beispielsweise eine Ausgabe in Form eines Signals an eine Notsteuerung zur Abwendung der Gefahrensituation für die Werkzeugmaschine bei einem Werkzeugbruch, insbesondere Sägeblattbruch, erfolgen. Hingegen kann bei weniger kritischen Zuständen, beispielsweise geringem Verschleiß eines Sägezahnes, eine Ausgabe über auftretenden Verschleiß erfolgen.

Die Detektion erfolgt vorzugsweise durch Zählen von detektierten Abweichungen und Ausgabe bei Überschreitung einer vorgegebenen Zahl von Abweichungen. Die derart gezählten Abweichungen können beispielsweise durch abgenutzte oder abgebrochene Zähne eines Sägeblattes entstehen. Die Abweichungen können vor der Zählung quantisiert werden und quantisiert gezählt werden. Für Verschleiß- oder Notsteuerungs- Ausgaben können unterschiedliche Schwellwerte gesetzt werden.

Das Verfahren ist für die Überwachung von Werkzeugen in Form von Sägeblättern entwickelt worden, welche für Hartmetallsägen, die unter rauhen Produktionsbedingungen innerhalb einer Rohrstraße arbeiten, vorgesehen sind, kann jedoch auch für andere Werkzeuge ausgebildet werden. Das Verfahren kann in einer Vorrichtung als elektronische Einrichtung und z.B. in Verbindung mit einem in einer speicherprogrammierbaren Steuerung gespeicherten Programm realisiert werden.

Weitere Merkmale und Vorteile ergeben sich aus den weiteren Unteransprüchen und der nachfolgenden Beschreibung eines Ausführungsbeispiels anhand der Zeichnung.

Dabei zeigt:

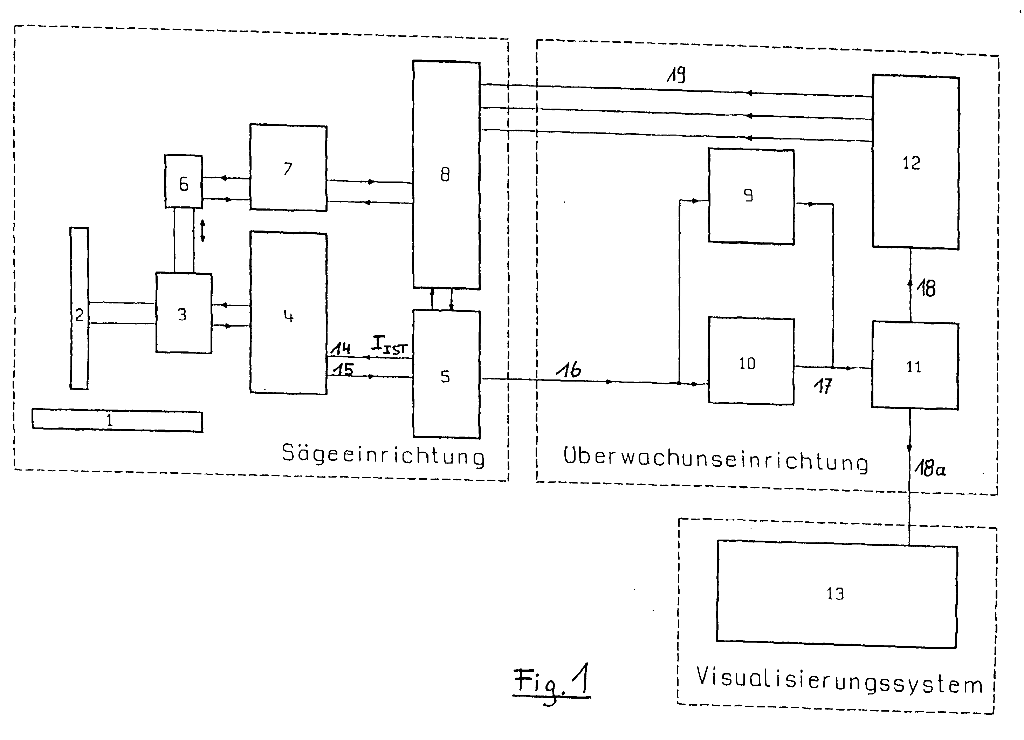

- Fig. 1: als Blockschaltbild eine erfindungsgemäße Vorrichtung.

Das zu trennende Material 1 in Figur 1 wird von einem Trenn- Werkzeug 2 (beispielsweise einer Hartmetallsäge) getrennt. Das Trennwerkzeug 2 wird über ein Getriebe 3 von einem Hauptspindelantrieb 4 angetrieben, welcher von einem Hauptspindelreglermodul 5 angesteuert wird. Der Vorschub des Spindelvorschubantriebs 6, mit welchem der Vorschub des Trenn-Werkzeuges 2 bezüglich des zu trennenden Materials 1 bewirkt wird, wird vom Vorschubreglermodul 7 geregelt. Das Vorschubreglermodul 7 und das Hauptspindelreglermodul 5 werden von der Steuerungs- und Regelungseinrichtung 8 der Werkzeugmaschine in Figur 1 gesteuert.

Der Iststrom I_{Ist}, welcher durch Leitungen 14, 15 (bzw. je dreiphasige Leitungsbündel) durch den Hauptspindelantrieb 4 fließt, wird im Hauptspindelregelmodul 5 gemessen (als Wechselstrom, Drehstrom etc.) und das Ergebnis dieser Istwert-Messung des Ist-Antriebsstromes I_{Ist} wird über die Leitung 16 an das Meß- und PD-Glied 10 übergeben. Die Messung der elektrischen Größe in Form des Ist-Wertes des Ist-Antriebsstroms I_{Ist} bzw. eines diesen Strom repräsentierenden Wertes (Spannung am Antrieb etc.) erfolgt stetig. Der Sollwert des Antriebsstromes wird in dem Meß- und Sollwert-Bildungsglied 9 aus dem Ist-Antriebsstrom (beispielsweise aus dem gemittelten Ist-Antriebsstrom zu mehreren vorhergehenden Zeitpunkten) gebildet. Im Meß- und PD-Glied 10 wird der gemessene Ist-Wert des Antriebsstromes und die daraus gebildete Ableitung des Antriebsstrom-Ist-Wertes bestimmt und mit dem ebenfalls im Meß- und Sollwert-Bildungsglied 9 aus dem Ist-Wert abgeleiteten dynamischen Soll-Wert und/oder dem Ableitungs-Sollwert verglichen und über die Leitung 17 dem Summations- und Entkoppelungsglied 11 zugeführt.

Diese von den Elementen 9 und 10 detektierten und im Kompensationsglied 11 weiterverarbeiteten Signale betreffend kritische Zustande werden über die Verbindung 18 an die Auswerteeinheit 12 und über die Leitung 18a zu einem Visualisierungssystem 13 weitergeleitet. In der Auswerteeinheit 12 wird das über die Verbindung 18 zugeführte Signal hinsichtlich kritischer Zustände klassifiziert und für die nachgeschaltete Steuerungs- und Regeleinrichtung 8 bereitgestellt. Die Auswerteeinheit 12 entscheidet über den Grad des kritischen Zustandes. Für einstellbare Klassifizierungsstufen können Steuerbefehlsgruppen als gewünschte Reaktion auf detektierte kritische Zustände festgelegt werden.

Diese über die Verbindung 19 geführten Signale (bzw. Steuerbefehlsgruppen) repräsentieren beispielsweise die Ansteuerungsbefehle für die Informationen "Warnung", "Störung" und "Crash" (= Werkzeugbruch) für die Steuerungs- und Regelungseinrichtung 8. Von dieser Steuerungs- und Regelungseinrichtung 8 werden zur aktiven Schadensbegrenzung an die Antriebe über die Reglermodule 5 und/oder 7 die Signale für eine festgelegte schadensmindernde Reaktion oder Routine übergeben.

So kann zum Beispiel durch ein Signal von der Steuerungs- und Regelungseinrichtung 8 an das Vorschubregelmodul 7 des Vorschubantriebes 6 die Vorschubgeschwindigkeit auf Null reduziert bzw. in Gegenrichtung aus der kritischen Gefahrenzone des Werkstückes positioniert werden, um dem möglicherweise nachfolgenden Crash (Werkzeugbruch) vorzubeugen bzw. zu entgehen; alternativ oder zusätzlich kann der Spindelantrieb 5 beispielsweise gestoppt werden.

Ferner kann in der Steuerungs- und Regelungseinrichtung 8 vorgesehen werden, daß während des Hochfahrens des Antriebs 4 und/oder weiterer technologisch bedingter Soll-Zustände im Falle von detektierten kritischen Zuständen diese im Hauptspindel-Reglermodul 5 hinsichtlich der Signalfreigabe der Leitung 16 und/oder der Ausgaben von der Einrichtung 8 an das Hauptspindel-Reglermodul 5 und das Vorschub-Reglermodul 7 und/oder der Eingaben der Leitungen 19 an 8 ignoriert bzw. gesperrt werden.

Abweichungen in Form einzelner ausgebrochener Sägeblattzähne können durch zyklische Antriebs-Ist-Strom-Schwankungen detektiert werden. Diese treten auf, wenn ein oder mehrere verschlissene oder ausgebrochene Zähne des Werkzeuges das Werkstück passieren und der nachfolgende Zahn das nicht abgetragene Material vom Werkstück zusätzlich trennen muß.

Des weiteren können kritische Zustände dadurch hervorgerufen werden, daß die Flanken eines oder mehrerer Zähne ausgebrochen sind und/oder eine oder mehrere Spankammern zugesetzt sind und/oder mechanische Defekte im Getriebe 3 auftreten und/oder das zu bearbeitende Material 1 nicht ordnungsgemäß gespannt ist. Die Größe der detektierten Abweichungen ist dabei abhängig von der Art und/oder der Größe der Beschädigung bzw. Störung.

Differenziert nach dem Grad des kritischen Zustandes werden die über die Verbindung 19 geführten Signale aus der Auswerteeinheit 12 im Hauptspindel-Reglermodul 8 innerhalb eines einstellbaren Zeitintervalles gezählt und mit einer vorgegebenen Soll-Größe verglichen. Bei Überschreitung der eingestellten Soll-Werte erfolgt eine dem Grad des kritischen Zustandes entsprechende Ausgabe der Steuer- und Regelungseinrichtung an das Hauptspindel-Reglermodul 5 und/oder das Vorschub-Reglermodul 7.

Anhaftende Späne und/oder zugesetzte Spankammern und/oder anderweitige Ereignisse, welche einen kritischen Zustand zur Folge haben, welche innerhalb des Zeitintervalles jedoch nicht zyklisch auftreten, werden als nichtkritische Zustände bewertet und haben somit keinen Einfluß auf den technologischen Ablauf der Sägeeinrichtungs-Steuerung.

Für Anlagen ohne eigenes Modul für die Steuerungs- und Regelungseinrichtung 8 besteht die Möglichkeit, die Funkionen Quantisierung und Vergleich (Filgerung) in einer elektronischen Schaltung zu realisieren und in die Überwachungseinrichtung zu implementieren.

Auf dem Visualisierungssystem 13 kann der zeitliche Verlauf des Grades detektierter kritischer Zustände anhand von Signalen auf der Verbindung 18a optisch als Funktion über der Zeit dargestellt werden. Dabei wird im Visualisierungssystem 13 beispielsweise der zeitliche Stromverlauf des Hauptspindelantriebes 4 der Werkzeugmaschine dargestellt. Der Betreiber der Vorrichtung hat damit ein laufend aktualisiertes Abbild des aktuellen Sägeblattzustandes sowie des bisherigen zeitlichen Verlaufs des Sägeblattzustandes.

Mit einer derartigen Überwachungseinrichtung können beispielsweise alle Sägeblätter an den Block- und Längensägen einer Rohrstoßbankanlage überwacht werden.

Die Relativbewegung zwischen dem Werkstück und dem Werkzeug kann eine (z.B. lieare) Hin- und Her-Bewegung sein. Sie kann auch durch Rotation des Werkstücks etc. bedingt sein.

Die in Figur 1 außerhalb der Überwachungseinrichtung dargestellten Elemente 8 und 5 können auch in Form einer elektronischen Schaltung in der Überwachungseinrichtung integriert sein. Durch diese Schaltung können durch die Werkzeugmaschine, das Werkzeug, das Werkstück, den Bearbeitungsvorgang, das Hochfahren etc. bedingte, als kritisch erfaßte Zustände immer oder unter bestimmten Bedingungen unterdrückt werden; von der Auswerteeinheit ausgegebene Meldungen betreffend als kritisch eingestufte Ereignisse können ausgefiltert (also unterdrückt) werden, wenn sie keinem kritischen Zustand zugeordnet werden können.

## Patentansprüche

1. Verfahren zum Detektieren des Auftretens eines kritischen Zustandes eines in einer Werkzeugmaschine (3,4,6,7) zur Bearbeitung eines Werkstückes (1) eingesetzten Werkzeuges (2) während des Betriebes der Werkzeugmaschine,
wobei die Werkzeugmaschine mittels einer von einer Steuereinrichtung (5,8,10,11) gesteuerten Antriebseinrichtung (4) eine Relativbewegung zwischen dem Werkzeug (2) und dem Werkstück (1) erzeugt und daß der Ist-Wert (Iᵢₛₜ) einer den die Antriebseinrichtung (4) durchfließenden Ist-Antriebsstrom repräsentierenden gemessenen elektrischen Größe in der Steuerungseinrichtung (5,10,11,8) mit einem Sollwert verglichen wird und daß bei Auftreten einer vorgebbaren Abweichung des Ist-Wertes vom Sollwert eine diesen kritischen Zustand repräsentierende Ausgabe an eine Auswerteeinheit (12) erfolgt,
**dadurch gekennzeichnet,**
**daß** aus dem zu mehreren vorhergehenden Zeitpunkten gemittelten Ist-Antriebsstrom durch Differenzieren ein abgeleiteter dynamischer Sollwert gebildet wird und mit dem gemessenen Ist-Wert des Antriebsstromes und mit der daraus gebildeten Ableitung kontinuierlich verglichen wird und zur Unterscheidung verschiedener kritischer Zustände das somit aufbereitete Signal klassifiziert und im Falle der Überschreitung des Grades eines kritischen Zustandes ein Steuerbefehl gebildet wird.

2. Verfahren nach Anspruch 1,
**dadurch gekennzeichnet,**
**daß** die vorgebbare Abweichung bei der eine einen kritischen Zustand repräsentierende Ausgabe erfolgt, eine Abweichung um mehr als einen vorgebbaren Sollwert der elektrischen Größe ist.

3. Verfahren nach Anspruch 2,
**dadurch gekennzeichnet,**
**daß** in einem Zähler innerhalb eines Zeitintervalls die Abweichung in Form der Häufigkeit mit oder ohne Berücksichtigung der jeweiligen Intensität und/oder Dauer der Abweichungen um mehr als einen Schwellwert gezählt wird und bei einem Maximal-Zählerstand eine Ausgabe erfolgt.

4. Verfahren nach einem der vorhergehenden Ansprüche,
**dadurch gekennzeichnet,**
**daß** das Vergleichen des Ist -Wertes mit dem Sollwert stetig erfolgt.

5. Verfahren nach einem der vorhergehenden Ansprüche,
**dadurch gekennzeichnet,**
**daß** das Vergleichen durch Differenzieren von Ist-Werten und Vergleichen differenzierter Ist-Werte mit den dynamisch vorgegebenen Soll-Werten erfolgt.

6. Verfahren nach einem der vorhergehenden Ansprüche,
**dadurch gekennzeichnet,**
**daß** aufgrund der Abweichungen von einer Auswerteeinheit die Art des kritischen Zustandes bestimmt wird und daß die Ausgabe die Art des kritischen Zustandes angibt.

7. Verfahren nach einem der vorhergehenden Ansprüche,
**dadurch gekennzeichnet,**
**daß** bei Detektion einer Abweichung in Form eines Werkzeugbruches, insbesondere eines Sägeblattbruches und/oder einer zugesetzten Spankammer und/oder eines mechanischen Defekts und/oder eines sonstigen Ereignisses, welches einen kritischen Zustand zur Folge hat, eine Ausgabe in Form eines Ausgangssignals an eine Steuerungs- und Regelungseinrichtung erfolgt, die zur sofortigen Aktivierung des Schnittabbruches und/oder in Folge zur Stilisetzung der Antriebsmaschine führt.

8. Verfahren nach einem der vorhergehenden Ansprüche,
**dadurch gekennzeichnet,**
**daß** bei die Arbeit des Werkzeuges noch erlaubenden kritischen Zuständen, insbesondere bei Sägezahnabbruch oder Sägezahnabnutzungen, nur die Art des kritischen Zustandes akustisch und/oder optisch als Ausgabe angezeigt wird.

9. Vorrichtung zur Durchführung des Verfahrens nach einem der vorhergehenden Ansprüche,
zum Detektieren des Auftretens eines kritischen Zustandes an einem in einer Werkzeugmaschine zur Bearbeitung eines Werkzeuges eingesetzten Werkzeug während des Betriebes der Werkzeugmaschine,
- mit Eingängen für den Ist-Wert (Iᵢₛₜ) einer den die Antriebseinrichtung (4) der Werkzeugmaschine (2,3,4) durchfließenden Strom repräsentierenden elektrischen Größe,
- mit einem Meß- und Sollwert-Bildungsglied (9), durch das aus dem zu mehreren vorhergehenden Zeitpunkten gemittelten Ist-Antriebsstrom durch Differenzieren ein abgeleiteter mit dem Ist-Wert (Iᵢₛₜ) zu vergleichender dynamischer Sollwert gebildet wird,
- und mit einer Vergleichseinrichtung (10,11) zum Vergleichen des Ist-Wertes (Iᵢₛₜ) mit dem Sollwert, die mehrere Zähler für die gewichtete oder ungewichtete Zählung von einen kritischen Zustand repräsentierenden Ereignissen innerhalb eines Zeitintervalls umfaßt und bei Überschreiten eingestellter Vergleichswerte den kritischen Zustand repräsentierende Ausgaben über Ausgänge der Vergleichseinrichtung erfolgen.

10. Vorrichtung nach Anspruch 9,
**dadurch gekennzeichnet,**
**daß** die Ausgänge einen den Grad des kritischen Zustandes quantisiert wiedergebenden Ausgang zu einem Visualisierungssystem (13) umfassen.

## Claims

1. Method for detecting the occurrence of a critical state of a tool (2) which is used in a machine tool (3, 4, 6, 7) for machining a workpiece (1) during operation of the machine tool, wherein the machine tool produces a relative movement between the tool (2) and the workpiece (1) by means of a driving device (4) controlled by a control device (5, 8, 10, 11), and that the actual value (Iᵢₛₜ) of a measured electrical quantity representing the actual driving current flowing through the driving device (4) is compared in the control device (5, 10, 11, 8) with a desired value, and that, upon the occurrence of a predeterminable deviation of the actual value from the desired value, an output representing this critical state to an evaluation unit (12) is effected,
**characterised in**
**that** a derived dynamic desired value is formed by differentiation from the actual driving current, which is averaged at a plurality of preceding instants, and continuously compared with the measured actual value of the driving current and with the derivative formed therefrom and, in order to distinguish different critical states, the signal which is thus conditioned is classified and, if the level of a critical state is exceeded, a control command is formed.

2. Method according to Claim 1,
**characterised in**
**that** the predeterminable deviation at which an output representing a critical state is effected is a deviation by more than one predeterminable desired value of the electrical quantity.

3. Method according to Claim 2,
**characterised in**
**that** the deviation in the form of the frequency, with or without taking account of the respective intensity and/or duration of the deviations, by more than one threshold value is counted in a counter within a time interval and, in the event of a maximum count, an output is effected.

4. Method according to any one of the preceding Claims,
**characterised in**
**that** the comparison of the actual value with the desired value takes place constantly.

5. Method according to any one of the preceding Claims,
**characterised in**
**that** the comparison takes place by differentiating actual values and comparing differentiated actual values with the dynamically predetermined desired values.

6. Method according to any one of the preceding Claims,
**characterised in**
**that** the type of critical state is determined on the basis of the deviations by an evaluation unit, and that the output indicates the type of critical state.

7. Method according to any one of the preceding Claims,
**characterised in**
**that**, upon detecting a deviation in the form of a tool fracture, in particular of a saw blade fracture and/or of an added chip space and/or of a mechanical defect and/or of another event which results in a critical state, an output in the form of an output signal to a control and regulating device is effected, this output leading to the immediate activation of a cutting discontinuation action and/or consequently to the shutdown of the driving machine.

8. Method according to any one of the preceding Claims,
**characterised in**
**that**, in the event of critical states which still allow the tool to work, in particular in the case of a sawtooth fracture or sawtooth wear, only the type of critical state is indicated acoustically and/or visually as an output.

9. Apparatus for carrying out the method according to any one of the preceding Claims,
for detecting the occurrence of a critical state at a tool which is used in a machine tool for machining a workpiece during operation of the machine tool,
- with inputs for the actual value (Iᵢₛₜ) of an electrical quantity representing the current flowing through the driving device (4) of the machine tool (2, 3, 4),
- with a measuring and desired value forming element (9), through which a derived dynamic desired value, which is to be compared with the actual vale (Iᵢₛₜ), is formed by differentiation from the actual driving current, which is averaged at a plurality of preceding instants,
- and with a comparator device (10, 11) for comparing the actual value (Iᵢₛₜ) with the desired value, which device comprises a plurality of counters for the weighted or unweighted counting of events representing a critical state within a time interval and, if set comparison values are exceeded, outputs representing the critical state are effected via outputs of the comparator device.

10. Apparatus according to Claim 9,
**characterised in**
**that** the outputs comprise an output which reproduces the level of the critical state in a quantized fashion to a visual display system (13).

## Revendications

1. Procédé destiné à détecter l'apparition d'un état critique sur un outil (2) utilisé pour l'usinage d'une pièce à usiner (1) dans une machine-outil (3, 4, 6, 7) en cours de fonctionnement de la machine-outil, la machine-outil produisant un mouvement relatif entre l'outil (2) et la pièce à usiner (1) au moyen d'un dispositif d'entraînement (4) commandé par un dispositif de commande (5, 8, 10, 11) et la valeur réelle (I_{réelle}) d'une grandeur électrique mesurée représentant le courant d'entraînement réel traversant le dispositif d'entraînement (4) étant comparée dans le dispositif de commande (5, 10, 11, 8) à une valeur de consigne et, en cas d'apparition d'un écart pouvant être prédéfini entre la valeur réelle et la valeur de consigne, une sortie représentant cet état critique ayant lieu au niveau d'une unité d'évaluation (12),
**caractérisé en ce que**, à partir du courant d'entraînement réel déterminé à plusieurs instants précédents, une valeur de consigne dynamique dérivée est formée par différentiation et comparée en continu avec la valeur réelle mesurée du courant d'entraînement et avec la dérivation formée à partir de celle-ci et **en ce que** le signal ainsi édité est classifié afin de différencier différents états critiques et **en ce que**, en cas de dépassement du degré d'un état critique, une instruction de commande est formée.

2. Procédé selon la revendication 1,
**caractérisé en ce que** l'écart pouvant être prédéfini qui a lieu lors de la sortie représentant un état critique est un écart supérieur à une valeur de consigne de la grandeur électrique pouvant être prédéfinie.

3. Procédé selon la revendication 2,
**caractérisé en ce que** l'écart est compté dans un compteur à l'intérieur d'un intervalle de temps sous forme de fréquence des écarts supérieurs à une valeur-seuil, avec ou sans prise en compte de l'intensité et/ou de la durée concernée, et **en ce qu'**une sortie a lieu lorsque le compteur atteint un niveau maximal.

4. Procédé selon l'une des revendications précédentes,
**caractérisé en ce que** la comparaison de la valeur réelle avec la valeur de consigne a lieu en permanence.

5. Procédé selon l'une des revendications précédentes,
**caractérisé en ce que** la comparaison a lieu par différentiation des valeurs réelles et comparaison des valeurs réelles différentiées avec les valeurs de consigne prédéfinies de façon dynamique.

6. Procédé selon l'une des revendications précédentes,
**caractérisé en ce que** la nature de l'état critique est déterminée par une unité d'évaluation en fonction des écarts et **en ce que** la sortie renseigne sur la nature de l'état critique.

7. Procédé selon l'une des revendications précédentes,
**caractérisé en ce que**, en cas de détection d'un écart sous la forme d'une rupture d'outil, notamment d'une rupture de lame de scie et/ou d'un logement à copeaux encrassé et/ou d'un dysfonctionnement mécanique et/ou d'un autre événement, lequel a pour conséquence un état critique, une sortie a lieu sous la forme d'un signal de sortie adressé à un dispositif de commande et de régulation, laquelle sortie conduit à l'activation immédiate de l'interruption de coupe et/ou, par suite, à l'immobilisation de la machine d'entraînement.

8. Procédé selon l'une des revendications précédentes,
**caractérisé en ce que**, en cas d'états critiques permettant encore le travail de l'outil, notamment en cas de rupture de dents de scie ou d'usure de dents de scie, la sortie se contente de signaler de manière acoustique et/ou optique la nature de l'état critique.

9. Dispositif de mise en oeuvre du procédé selon l'une des revendications précédentes, destiné à détecter l'apparition d'un état critique sur un outil utilisé pour l'usinage d'une pièce dans une machine-outil en cours de fonctionnement de la machine-outil,
- avec des entrées pour la valeur réelle (I_{réelle}) d'une grandeur électrique représentant le courant traversant le dispositif d'entraînement (4) de la machine-outil (2, 3, 4),
- avec un élément de mesure et de formation de valeur de consigne (9), par lequel, à partir du courant d'entraînement réel déterminé à plusieurs instants précédents, il est formé par différentiation une valeur de consigne dynamique dérivée à comparer avec la valeur réelle (I_{réelle}),
- et avec un dispositif de comparaison (10, 11) servant à comparer la valeur réelle (I_{réelle}) à la valeur de consigne, lequel comporte plusieurs compteurs pour le comptage pondéré ou non pondéré d'événements représentant un état critique à l'intérieur d'un intervalle de temps et, en cas de dépassement de valeurs de comparaison réglées, des sorties représentant l'état critique ayant lieu par l'intermédiaire de sorties du dispositif de comparaison.

10. Dispositif selon la revendication 9,
**caractérisé en ce que** les sorties comportent une sortie vers un système de visualisation (13), laquelle sortie traduit de façon quantifiée le degré de l'état critique.
